**Europäisches Patentamt**

**European Patent Office**

**Office européen des brevets**

(19)

(11) Veröffentlichungsnummer : **0 413 800 B1**

(12) **EUROPÄISCHE PATENTSCHRIFT**

(45) Veröffentlichungstag der Patentschrift :
28.10.92 Patentblatt 92/44

(51) Int. Cl.⁵ : **B60S 1/52**, B60S 1/34

(21) Anmeldenummer : **90904300.2**

(22) Anmeldetag : **02.03.90**

(86) Internationale Anmeldenummer :
**PCT/EP90/00346**

(87) Internationale Veröffentlichungsnummer :
**WO 90/10563 20.09.90 Gazette 90/22**

(54) **SCHEIBENREINIGUNGSANLAGE.**

(30) Priorität : **11.03.89 DE 3907979**

(43) Veröffentlichungstag der Anmeldung :
**27.02.91 Patentblatt 91/09**

(45) Bekanntmachung des Hinweises auf die
Patenterteilung :
**28.10.92 Patentblatt 92/44**

(84) Benannte Vertragsstaaten :
**ES FR GB IT SE**

(56) Entgegenhaltungen :
**DE-A- 3 521 024**
**DE-A- 3 523 441**
**US-A- 2 609 561**
**US-A- 3 670 354**

(73) Patentinhaber : **SWF Auto-Electric GmbH**
**Stuttgarter Strasse 119 Postfach 1763**
**W-7120 Bietigheim-Bissingen (DE)**

(72) Erfinder : **BÖHMER, Rainer**
**Im Vogelsang 14**
**W-7125 Kirchheim/Neckar (DE)**
Erfinder : **RIENHARDT, Hans-Peter**
**Steppbachweg 79**
**W-7107 Neckarsulm (DE)**
Erfinder : **WALTHER, Bernd**
**Birkenweg 20**
**W-7120 Bietigheim-Bissingen (DE)**

**Beschreibung**

Die Erfindung bezieht sich auf eine Scheibenreinigungsanlage, insbesondere für Kraftfahrzeuge, gemäß den Merkmalen des Oberbegriffs des Anspruchs 1.

Moderne Kraftfahrzeuge haben eine Scheibenreinigungsanlage, zu der neben einer Scheibenwischanlage auch eine Scheibenwaschanlage gehört, über die Waschflüssigkeit auf die zu reinigende Scheibe gespritzt wird. In jüngster Zeit haben sich Ausführungen durchgesetzt; bei denen diese Waschflüssigkeit durch eine Bohrung in der Wischerwelle zu einer Düse oberhalb des Wischarmes gefördert wird. Eine Anlage dieser Art ist aus der DE-A- 35 23 441 bekannt. Bei dieser Ausführung steckt in der durchgehenden Bohrung in der Wischerwelle zur Bildung eines Waschflüssigkeitskanals ein Rohr, an dessen einem Ende einstückig ein Schlauchanschlußstutzen angeformt ist. Am anderen, über die Wischerwelle vorstehenden Ende ist mit diesem Rohr ein Düsenkörper verrastet. Der Düsenkörper hat dabei eine Rastaufnahme, die mit einem an der Außenfläche des Rohres ausgebildeten balligen Rastkörper zusammenwirkt. Eine solche Ausführung hat sich in der Praxis bewährt. Allerdings ist festzustellen, daß eine Demontage des Düsenkörpers bei einer eventuell notwendigen Reparatur dann sehr schwierig ist, wenn man diese Rasteinrichtung so ausgestaltet, daß auch nach längerer Betriebszeit eine ausreichende Dichtheit an dieser Übergangsstelle zwischen dem Rohr und dem Düsenkörper gewährleistet ist. Wählt man dagegen für den Rastkörper am Rohr und die Rastaufnahme am Düsenkörper Abmessungen und Werkstoffe, die eine Verrastung ohne großen Kraftaufwand ermöglichen, ist zu befürchten, daß insbesondere bei einem höheren Förderdruck an dieser Stelle Waschflüssigkeit austritt. Nachteilig bei der bekannten Ausführung ist außerdem, daß das Rohr jedenfalls dann nicht ohne Schwierigkeiten ausgewechselt werden kann, wenn es sich um eine Heckwischeranlage handelt, bei der die Wischerwelle direkt in das Getriebegehäuse des Antriebsmotors integriert ist.

Der vorliegenden Erfindung liegt daher die Aufgabe zugrunde, eine Scheibenreinigungsanlage der eingangs erwähnten Art derart weiterzubilden, daß die einen Waschflüssigkeitskanal durch eine durchbohrte Wischerwelle bildenden Einzelteile leicht montierbar und in einem eventuellen Schadensfall austauschbar sind, aber dennoch auch nach längerer Betriebszeit eine bei höheren Förderdrücken sichere Abdichtung gewährleistet ist..

Diese Aufgabe wird erfindungsgemäß mit den kennzeichnenden Merkmalen des Anspruchs 1 gelöst.

Der Erfindung liegt dabei die Überlegung zugrunde, daß die Anforderungen bei einer Funktionstrenneung zwischen Rastung und Dichtung besser erfüllt werden können als bei der bekannten Ausführung, bei der über den Rastkörper und die Rastaufnahme einerseits der Düsenkörper gehalten, aber andererseits durch diese Mittel zugleich auch eine Abdichtung zwischen dem Rohr und dem Düsenkörper erreicht werden muß.

Bei einer bevorzugten Ausbildung wird deshalb zur Bildung einer Abdichteinrichtung am Düsenkörper - neben dem Rastkörper - ein Dichtwulst vorgesehen, der mit Preßsitz am Rohr anliegt.

Eine besonders betriebssichere Verbindung zwischen dem Düsenkörper und dem Rohr erreicht man durch eine Weiterbildung gemäß den Merkmalen des Anspruchs 3. Dabei ragt der Düsenkörper mit seinem rohrartigen Ansatz in das Endstück des Rohres hinein, ist also nicht über das freie Ende des Rohres gestülpt, wie dies bei der bekannten Ausführung der Fall ist. Im Gegensatz zur bekannten Ausführung ist dann an diesem rohrartigen Ansatz des Düsenkörpers der ballige Rastkörper angeordnet, während an der Innenwand des Rohres die mit diesem Rastkörper zusammenwirkende Rastaufnahme ausgebildet ist. Im Abstand von diesem Rastkörper, unnd zwar zwischen dem Rastkörper und dem freien Ende des rohrartigen Ansatzes, ist dann der Dichtwulst vorgesehen, der an der Innenwand des Rohres mit Preßsitz anliegt. Die Verlagerung der Rasteinrichtung in einen Bereich innerhalb des Rohres ermöglicht nämlich, daß dieser Düsenkörper gewissermaßen im Bereich der Bohrung der Wischerwelle fixiert wird. Dies bedeutet andererseits, daß die Wand des Rohres vergleichsweise dünn gewählt werden kann, weil ein Ausweichen des üblicherweise aus Kunststoff hergestellten Rohres durch die Wand am Rand der Bohrung in der Wischerwelle verhindert wird. Nur der Ordnung halber wird darauf hingewiesen, daß die Fixierung eines Düsenkörpers innerhalb der Bohrung einer Wischerwelle aus der US-A- 2 609 561 an sich bekannt ist. Dort wird allerdings der Düsenkörper mit der Wischerwelle verschraubt, was nur bei Wischanlagen mit Wischerwellen möglich ist, die einen vergleichsweisen großen Durchmesser aufweisen. Eine Ausbildung nach der vorliegenden Erfindung ist dagegen auch bei Heckwischeranlagen realisierbar, bei denen Wischerwellen mit einem vergleichsweise kleinen Durchmesser üblich sind.

Um die Montage und Demontage einer solchen Ausführung zu vereinfachen, ist gemäß einer vorteilhaften Weiterbildung der Erfindung das Rohr nahe dem Schlauchanschlußstutzen mit einer weiteren Rasteinrichtung versehen, die eine lösbare Fixierung an einem ortsfesten Halteelement ermöglicht. Bei einer solchen Ausführung kann also dieses Rohr mit dem einstückig angeformten Schlauchanschlußstutzen auch dann ausgewechselt werden, wenn dieses Halteelement beispielsweise unlösbar mit einem Deckel eines Getriebegehäuses verbunden ist, in dem das Getriebe und der Motor zum Antrieb der Wischerwelle untergebracht sind. Eine solche Lösung wird aus montagetechnischen Gründen auch dann bevorzugt, wenn das Rohr mit dem einstückig angeformten Schlauchanschlußstutzen ortsfest gehalten ist. Es wird in diesem Zusammenhang darauf hingewiesen, daß für dieses Prinzip einer Verrastung des Rohres an einem ortsfesten Halteelement eine solche Ausbildung natürlich auch dann mit Vorteil realisierbar ist, wenn am anderen Ende ein Düsenkörper mit dem Rohr in der aus der eingangs erwähnten DE-A- 35 23 441 bekannten Art verrastet ist.

Die Erfindung und deren vorteilhafte Ausgestaltungen werden nachstehend anhand des in der Zeichnung dargestellten Ausführungsbeispiels näher erläutert. Es zeigen:

Fig. 1 einen Teilschnitt durch eine Scheibenreinigungsanlage im Bereich einer Wischerwelle, wobei nur die für die Erfindung wesentlichen Teile dargestellt sind,

Fig. 2 in vergrößertem Maßstab einen Schnitt durch den Düsenkörper,

Fig. 3 eine Seitenansicht auf den Düsenkörper,

Fig. 4 in vergrößertem Maßstab einen Teilschnitt durch das Rohr mit dem Schlauchanschlußstutzen und

Fig. 5 einen Schnitt durch ein Halteelement für das Rohr.

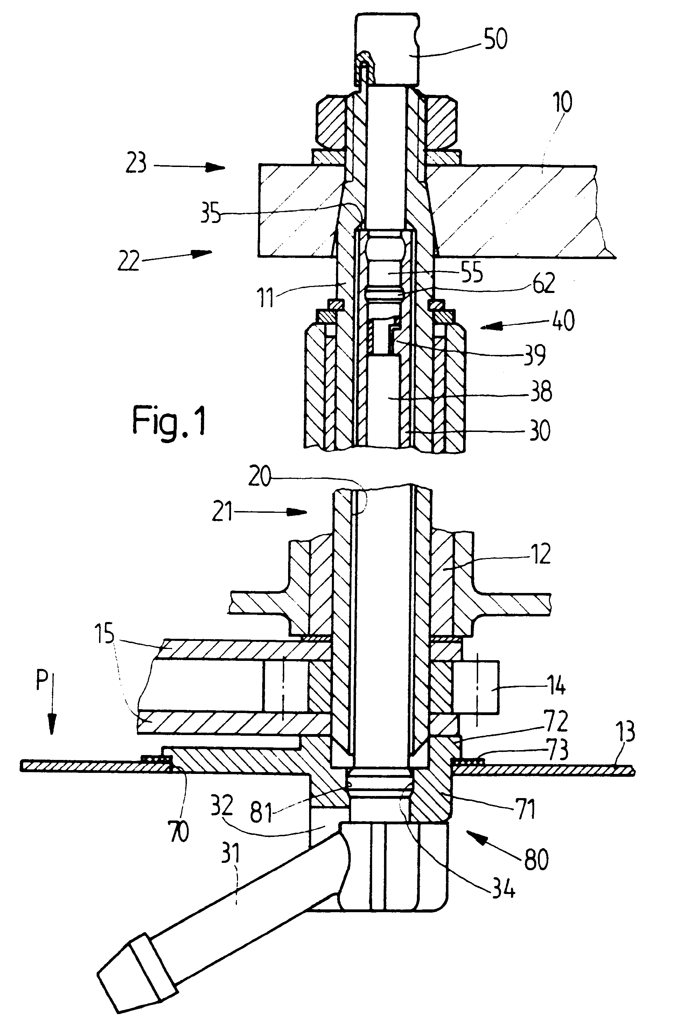

In Fig. 1 ist mit 10 das Befestigungsteil eines Wischarmes bezeichnet, das in bekannter Weise am freien Ende einer Wischerwelle 11 drehfest fixiert ist. Die Wischerwelle ist in bekannter Weise in einer Lagerbuchse 12 schwenkbar gelagert, die aus einem durch einen Deckel 13 abgeschlossenen Getriebegehäuse vorsteht. Von dem innerhalb dieses Getriebegehäuses angeordneten Getriebe sind ein Ritzel 14 und Hebel 15 angedeutet. Derartige Scheibenreinigungsanlagen sind im Prinzip bekannt, so daß sich weitere Ausführungen dazu erübrigen dürften.

Die Wischerwelle 11 hat eine von der Antriebsseite im Bereich des Ritzels 14 bis zur Abtriebsseite im Bereich des Wischarms durchgehende Bohrung 20, in die von der Antriebsseite her zur Bildung eines Waschflüssigkeitskanals ein Rohr 30 aus Kunststoff eingesteckt ist. Aus Fig. 1 ist ersichtlich, daß diese Bohrung 20 Abschnitte mit unterschiedlichem Durchmesser aufweist. Ein erster Abschnitt 21 mit einem größeren Durchmesser reicht von der Antriebsseite bis zu einer Übergangsstelle 22 in Höhe des Befestigungsteiles 10 des Wischarms. Der Abschnitt 23 von dieser Übergangsstelle bis zum freien Ende der Wischerwelle 11 hat dagegen einen geringfügig kleineren Durchmesser.

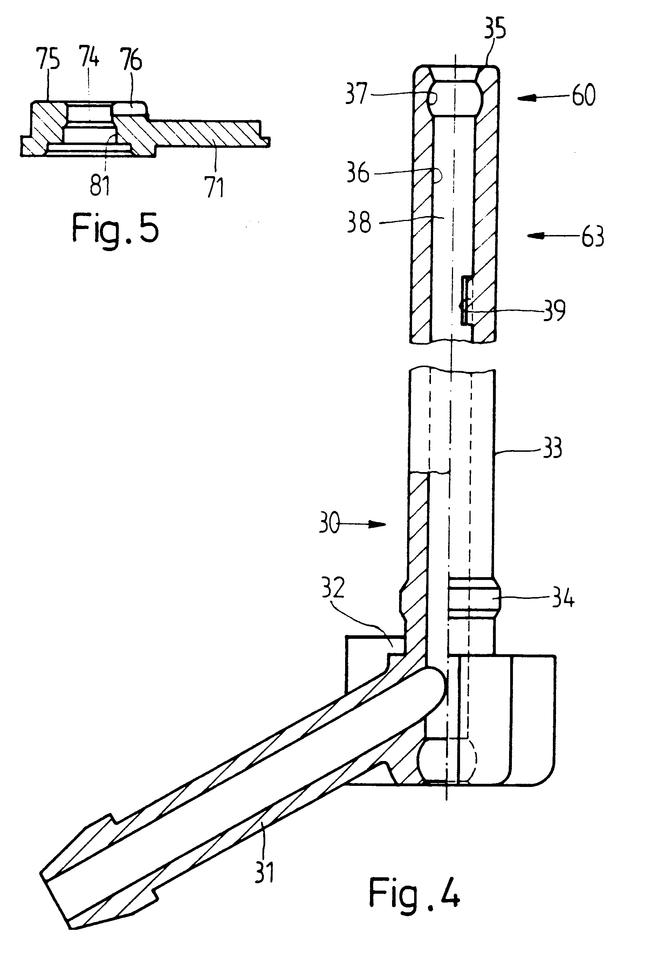

Das Rohr 30 trägt an seinem einen Ende einstückig einen Schlauchanschlußstutzen 31, der im Winkel von der Drehachse der Wischerwelle 11 absteht, wodurch die Montage eines nicht näher dargestellten Schlauches erleichtert wird. An der Übergangsstelle zwischen diesem Rohr 30 und dem Schlauchanschlußstutzen 31 ist eine Fixiernase 32 vorgesehen, deren Bedeutung später erläutert wird. Im Abstand von dieser Übergangsstelle erkennt man in Fig. 1 und insbesondere auch in Fig. 4 eine von der Mantelfläche 33 des Rohres 30 vorstehende Rasterhebung 34. Das Rohr 30 hat im übrigen einen in wesentlichen konstanten Außendurchmesser bis zur freien Stirnfläche 35, die im Abstand von dem freien Ende der Wischerwelle 11 in der Übergangszone 22 liegt. Nahe dieser Stirnfläche 35 ist an der Innenwand 36 dieses Rohres 30 eine kugelkalottenartige Rastaufnahme 37 ausgebildet.

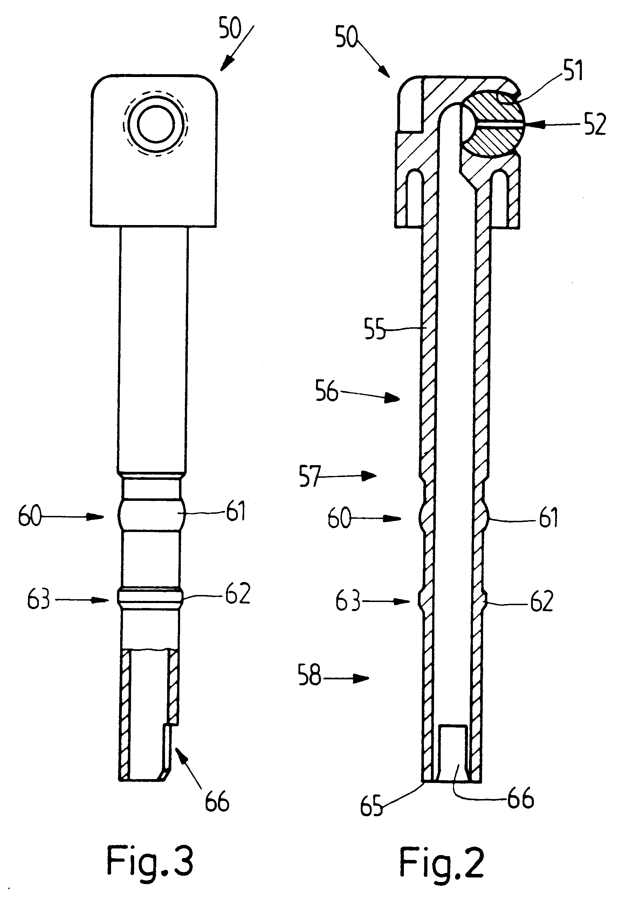

Von dieser Rastaufnahme 37 aus erweitert sich der Waschflüssigkeitskanal 38 konisch, so daß eine Zwangsentformung des Werkzeuges nach dem Spritzen dieses Kunststoffrohres 30 möglich ist. Im Abstand von dieser Rastaufnahme 37 steht von der Innenwand 36 des Rohres 30 ein axial ausgerichteter Steg 39 ab, der zu einer insgesamt mit 40 bezeichneten Verdrehsicherung für den insgesamt mit 50 bezeichneten Düsenkörper gehört. Dieser Düsenkörper 50, der in den Fig. 2 und 3 in vergrößertem Maßstab dargestellt ist, hat eine Mulde 51, in die in bekannter Meise eine Kugeldüse 52 einknöpfbar ist. Der Düsenkörper 50 hat einen im wesentlichen zylindrischen, rohrartigen Ansatz 55, der in das Endstück des Rohres 30 hineinragt. Dieser rohrartige Ansatz 55 hat ebenfalls Abschnitte mit unterschiedlichen Durchmessern, nämlich einen Abschnitt 56 mit einem größeren Durchmesser und einen von der Übergangszone 57 ausgehenden Abschnitt 58 mit einem kleineren Durchmesser. Aus Fig. 1 geht deutlich hervor, daß dieser erste Abschnitt 56 mit dem größeren Durchmesser, der passend in dem Abschnitt 23 in der Bohrung 20 der Wischerwelle 11 steckt, der sich von der Übergangszone 22 aus zum freien Stirnende erstreckt. Der andere Abschnitt 58 des rohrartigen Ansatzes 55 ist dagegen in einem Bereich der Bohrung 20 in der Wischerwelle 11 angeordnet, in dem dessen Durchmesser vergrößert ist, so daß Platz zur Aufnahme des Rohres 30 verfügbar ist. Dieser Abschnitt 58 des Ansatzes 55 steckt damit im Endstück des Rohres 30 selbst.

Zu einer insgesamt mit 60 bezeichneten Rasteinrichtung gehört ein ballig ausgebildeter Rastkörper 61, der von der Außenwand des rohrartigen Ansatzes 55 vorsteht und passend in die Rastaufnahme 37 am Rohr 30 eingreift. Im Abstand von diesem Rastkörper 61 steht von der Außenwand des rohrartigen Ansatzes 55 ein umlaufender Dichtwulst 62 vor. Dieser Dichtwulst ist Bestandteil einer insgesamt mit 63 bezeichneten Abdichteinrichtung. Insbesondere aus Fig. 2 wird deutlich, daß dieser Dichtwulst 62 zwischen dem Rastkörper 61 und dem freien Ende 65 des rohrartigen Ansatzes 55 vorgesehen ist, das einen Axialschlitz 66 aufweist.

Insgesamt ist also aus den Zeichnungen erkennbar, daß zwischen dem Düsenkörper 50 und dem Rohr 30 neben einer Rasteinrichtung 60 mit dem Rastkörper 61 und der Rastaufnahme 37 eine Abdichteinrichtung 63 vorhanden ist, denn dieser umlaufende Dichtwulst 62 liegt mit Preßsitz an der Innenwand 36 am Rohr 30 an. Dabei liegt die Rasteinrichtung 60 und damit auch die Rastaufnahme 37 nahe dem freien Ende des Rohres, was aus werkzeugtechnischen Gründen im Interesse einer einfachen Herstellung sinnvoll ist. Der Dichtwulst 62 liegt dagegen von diesem freien Rohrende weiter weg, weil in diesem Bereich in die Innenwand 36 des Rohres 30 keine Vertiefungen oder ähnliches eingearbeitet werden müssen. Im diesem Bereich ist die Innenwand glatt ohne jede Vertiefung. Dabei ist auch vorteilhaft, daß die Abdichteinrichtung 63 so angeordnet ist, daß aufgrund des Zusammenwirkens von Rastaufnahme 37 und Rastkörper 61 ggf. eine zusätzliche Abdichtung gegeben ist. Der Düsenkörper 50 ist also betriebssicher an dem Rohr 30 verrastet, wobei durch eine zusätzliche Abdichteinrichtung 63 sichergestellt ist, daß auch nach längerer Betriebszeit keine Waschflüssigkeit austritt. Durch das Zusammenwirken des Axialschlitzes 66 am Düsenkörper 50 mit dem Steg 39 am Rohr 30 ist außerdem eine Verdrehsicherung geschaffen.

Aus Fig. 1 geht hervor, daß dieses Rohr 30 einen Durchbruch 70 im Deckel 13 durchdringt. Dieser Durchbruch 70 ist durch ein Verschlußstück 71 verschlossen, das von der Getriebeseite her in Pfeilrichtung P in diesen Durchbruch 70 eingesetzt ist. Zwischen einem Auflageflansch 72 und dem Getriebegehäusedeckel 13 ist eine Dichtung 73 vorgesehen. Nach dem Zusammenbau der gesamten Anlage kann dieses Verschlußstück 71 nicht mehr demontiert werden, denn es wird durch den Hebel 15 in dem Durchbruch 70 gehalten.

Wesentlich ist, daß eine Demontage dieses Verschlußstückes im Unterschied zu der bekannten Ausführung bei der erfindungsgemäßen Ausführung nicht notwendig ist, weil das Rohr 30 über eine weitere Rasteinrichtung 80 lösbar an diesem als Halteelement dienenden Verschlußstück 71 verrastbar ist. Das Verschlußstück 71 hat eine Bohrung 74 zur passenden Aufnahme des Rohres 30, wobei im Bereich dieser Bohrung eine Rastaufnahme 81 für die am Rohr 30 ausgebildete Rasterhebung 34 vorgesehen ist. Das Rohr 30 mit dem einstückig angeformten Schlauchanschlußstutzen 31 kann also entgegen der Pfeilrichtung P in die Bohrung 74 des bereits am Getriebegehäusedeckel fixierten Halteelementes bzw. Verschlußstückes 71 eingeführt und dann nach vorübergehender Aufweitung der Bohrung 74 mit diesem Verschlußstück 71 verrastet werden. An dieser Stelle ist natürlich eine zusätzliche Abdichtung nicht erforderlich, weil das Rohr mit dem Schlauchanschlußstutzen einstückig gefertigt ist. Auf der dem Schlauchanschlußstutzen 31 zugewandten Stirnseite 75 ist am Verschlußstück 71 eine Kerbe 76 vorgesehen, in die die Fixiernase 32 am Rohr 30 eingreifen kann. Damit ist also eine Verdrehsicherung zwischen dem Rohr und dem ortsfesten Verschlußstück 71 geschaffen. Für unterschiedliche Ausführungen wird man am Verschlußstück 71 Verdrehschutzkerben in unterschiedlichen Winkellagen vorsehen, so daß bei einer einheitlichen Ausbildung des Getriebegehäusedeckels das Rohr 30 mit einem einstückigen Schlauchanschlußstutzen 31 in unterschiedlichen Winkellagen so angeordnet werden kann, daß der Schlauch ohne Probleme auf den Schlauchanschlußstutzen 31 aufgesteckt werden kann.

## Patentansprüche

1. Scheibenreinigungsanlage, insbesondere für Kraftfahrzeuge, mit einer Wischerwelle (11) zum pendelnden Antriebs eines Wischarms, die eine durchgehende Bohrung aufweist, in der zur Bildung eines Waschflüssigkeitkanals eine Rohr (30) angeordnet ist, an dessen einem Ende über einen Schlauchanschlußstutzen (31) ein Schlauch anschließbar ist und an dessen anderem Ende ein Düsenkörper (50) mit einer Düse mittels einer Rasteinrichtung (37,60,61) bestehend aus einer Rastaufnahme (37) und einem darin eingreifenden Rastkörper (60,61) gehalten ist, dadurch gekennzeichnet, daß zwischen dem Düsenkörper (50) und dem Rohr (30) außerdem eine von der Rasteinrichtung (60) unabhängige Abdichteinrichtung (63) angeordnet ist.

2. Scheibenreinigungsanlage nach Anspruch 1, dadurch gekennzeichnet, daß zur Abdichteinrichtung (63) ein Dichtwulst (62) am Düsenkörper (50) gehört, der mit Preßsitz am Rohr (30) anliegt.

3. Scheibenreinigungsanlage nach Anspruch 1 oder 2, dadurch gekennzeichnet, daß der Düsenkörper (50) mit einem rohrartigen Ansatz (55) in das Endstück des Rohres (30) hineinragt, daß an diesen rohrartigen Ansatz (55) ein balliger Rastkörper (61) angeformt, daß an der Innenwand (36) des Rohres (30) eine entsprechende, mit diesem Rastkörper (61) zusammenwirkende Rastaufnahme (37) ausgebildet ist und daß im Abstand von diesem Rastkörper (61) von dem rohrartigen Ansatz (55) der Dichtwulst (62) absteht, der an der Innenwand (36) des Rohres (30) mit Preßsitz anliegt.

4. Scheibenreinigungsanlage nach Anspruch 3, dadurch gekennzeichnet, daß der Dichtwulst (62) zwischen dem Rastkörper (61) und dem freien Ende des rohrartigen Ansatzes (55) am Düsenkörper (50) angeordnet ist.

5. Scheibenreinigungsanlage nach Anspruch 3 oder 4, dadurch gekennzeichnet, daß die Rastaufnahme (37) nahe dem freien Ende am Rohr (30) angeordnet ist.

6. Scheibenreinigungsanlage nach wenigstens einem der vorhergehenden Ansprüche, dadurch gekennzeichnet, daß das Rohr (30) im Abstand von dem freien ende der Wischerwelle (11) endet.

7. Scheibenreinigungsanlage nach wenigstens einem der vorhergehenden Ansprüche, dadurch gekennzeichnet, daß das Rohr (30) mit dem Schlauchanschlußstutzen (31) einstückig aus Kunststoff gefertigt ist.

8. Scheibenreinigungsanlage nach wenigstens einem der vorhergehenden Ansprüche, dadurch gekennzeichnet, daß der Düsenkörper (50) verdrehsicher am Rohr (30) gehalten ist.

9. Scheibenreinigungsanlage nach Anspruch 8, dadurch gekennzeichnet, daß das freie Ende des rohrartigen Ansatzes (55) einen Axialschlitz (66) aufweist und daß von der Innenwand (36) des Rohres (30) ein in diesen Axialschlitz (66) eingreifender axial ausgerichteter Steg (39) vorsteht.

10. Scheibenreinigungsanlage nach wenigstens einem der vorhergehenden Ansprüche, dadurch gekennzeichnet, daß das Rohr (30) nahe dem Schlauchanschlußstutzen (31) eine weitere Rasteinrichtung (80) zur lösbaren Fixierung an einen ortsfesten Halteelement (71) trägt.

11. Scheibenreinigungsanlage nach Anspruch 10, dadurch gekennzeichnet, daß die Wischerwelle (11) aus einem Getriebegehäuse herausragt, das durch einen Deckel (13) abgeschlossen ist, der einen Durchbruch (70) zur Durchführung des Rohres (30) aufweist, wobei dieser Durchbruch (70) durch ein als Halteelement für das Rohr (30) dienendes Verschlußstück (71) abgeschlossen ist.

12. Scheibenreinigungsanlage nach Anspruch 11, dadurch gekennzeichnet, daß das Verschlußstück (71) eine Bohrung (74) zur passenden Aufnahme des Rohres (30) aufweist und daß im Bereich dieser Bohrung (74) eine Rastaufnahme (81) vorgesehen ist, in die eine von der Mantelfläche des Rohres (30) vorstehende Rasterhebung (34) eingreift.

13. Scheibenreinigungsanlage nach Anspruch 12, dadurch gekennzeichnet, daß dieses Verschlußstück (71) auf der dem Schlauchanschlußstutzen (31) zugewandten Stirnseite (75) ein Element (76) zur drehsicheren Fixierung des Rohres (30) mit dem Schlauchanschlußstutzen (71) aufweist.

14. Scheibenreinigungsanlage nach Anspruch 12, dadurch gekennzeichnet, daß die Stirnseite (75) am Verschlußstück (71) eine Kerbe (76) aufweist, in die eine vom Rohr (30) vorstehende Fixiernase (32) eingreift.

## Claims

1. Windshield cleaning system, especially for motor vehicles, comprising a wiper shaft (11) for driving a wiper arm in pendulum fashion, which wiper shaft includes a bore in which a pipe (30) is arranged in order to form a washing liquid channel onto the one end of which a hose may be connected by means of a pipe union (31) and on the other end of which a nozzle body (50) with a nozzle is held by a locking device (37, 60, 61) consisting of a locking recess (37) and a locking body (60, 61) engaging therein, wherein between the nozzle body (50) and the pipe (30) a sealing device (63) is additionally arranged, which is independent of the locking device (60).

2. Windshield cleaning system according to claim 1, wherein a sealing bead (62) on the nozzle body (50) is part of the sealing device (63), which sealing bead rests against the pipe (30) with press fit.

3. Windshield cleaning system according to claim 1 or 2, wherein the nozzle body (50) projects into the end portion of the pipe (30) by means of a pipe-shaped stud (55), wherein a crowned locking body (61) is formed onto the said pipe-shaped stud (55), wherein a corresponding locking recess (37) is formed onto the inner wall (36) of the pipe (30) and that with a spacing from the said locking body (61) the sealing bead (62) projects from the pipe-shaped stud (55) which sealing bead rests against the inner wall (36) of the pipe (30) with press fit.

4. Windshield cleaning system according to claim 3, wherein the sealing bead (62) is arranged between the locking body (61) and the free end of the pipe-shaped stud (55) on the nozzle body (50).

5. Windshield cleaning system according to claim 3 or 4, wherein the locking recess (37) is arranged on the pipe (30) in the vicinity of its free end.

6. Windshield cleaning system according to at least any one of the preceding claims, wherein the pipe (30) ends with a spacing from the free end of the wiper shaft (11).

7. Windshield cleaning system according to at least any one of the preceding claims, wherein the pipe (30) is formed from plastic material in one piece with the pipe union (31).

8. Windshield cleaning system according to at least any one of the preceding claims, wherein the nozzle body (50) is held on the pipe (30) in a manner protected against twisting.

9. Windshield cleaning system according to claim 8, wherein the free end of the pipe-shaped stud (55) has an axial slot (66) and wherein a web (39), which is axially aligned and engages in the said axial slot (66), projects from the inner wall (36) of the pipe (30).

10. Windshield cleaning system according to at least any one of the preceding claims, wherein the pipe (30) carries another locking device (80) in the vicinity of the pipe union (31) for a detachable fixation on a stationary holding element (71).

11. Windshield cleaning system according to claim 10, wherein the wiper shaft (11) projects from a gear housing covered by a cover (13) having an aperture (70) for conducting a pipe through it, wherein the said aperture (70) is closed by a closing element (71) serving as a holding element for the pipe (30).

12. Windshield cleaning system according to claim 11, wherein the closing element (71) has a bore (74) in order to receive the pipe (30) fittingly and wherein in the area of the said bore (74) o locking recess (81) is provided, in which a locking projection extending from the generated surface of the pipe (30) engages.

13. Windshield cleaning system according to claim 12, wherein the closing element (71), at the front side (75) facing the pipe union (31), includes an element (76) for securing the pipe (30) with the pipe union (71) in a manner protected against twisting.

14. Windshield cleaning system according to claim 12, wherein the front side (75) of the closing element (71) has a notch (76), into which a fixing nose (32) projecting from the pipe (30) engages.

**Revendications**

1. Installation de nettoyage de glace, notamment pour véhicule automobile, comprenant un arbre (11) d'essuie-glace, servant à entraîner un bras d'essuie-glace en un mouvement alternatif, arbre qui présente un perçage traversant dans lequel est disposé, pour former un canal de liquide de lavage, un tube (30) à une des extrémités duquel un tuyau peut être raccordé par l'intermédiaire d'une tubulure (31) de raccordement de tuyau, et à l'autre extrémité duquel est monté un corps de buse (50) muni d'une buse, au moyen d'un dispositif de verrouillage (37, 60, 61) composé d'un logement de verrouillage (37) et d'un corps de verrouillage (60, 61) qui s'engage dans ce logement, caractérisée en ce qu'en supplément, un dispositif d'étanchéité (63) indépendant du dispositif de verrouillage (60) est interposé entre le corps de buse (50) et le tube (30).

2. Installation de nettoyage de glace selon la revendication 1, caractérisée en ce que le dispositif d'étanchéité (63) comprend un bourrelet d'étanchéité (62) formé sur le corps (50) de la buse, qui est appuyé contre le tube (30) en formant un ajustement serré.

3. Installation de nettoyage de glace selon l'une des revendications 1 ou 2, caractérisée en ce que le corps (50) de buse est engagé par un prolongement tubulaire (55) dans la portion d'extrémité du tube (30), en ce que sur ce prolongement tubulaire (55) est formé un corps de verrouillage bombé (61), en ce que sur la paroi intérieure (36) du tube (30) est formé un logement de verrouillage (37) correspondant qui coopère avec ce corps de verrouillage (61), et en ce qu'à distance de ce corps de verrouillage (61) fait saillie, sur le prolongement tubulaire (55), le bourrelet d'étanchéité (62) qui est appuyé avec ajustement serré contre la paroi intérieure (36) du tube (30).

4. Installation de nettoyage de glace selon la revendication 3, caractérisée en ce que le bourrelet d'étanchéité (62) est disposé sur le corps (50) de buse entre le corps de verrouillage (61) et l'extrémité libre du prolongement tubulaire (55).

5. Installation de nettoyage de glace selon l'une des revendications 3 ou 4, caractérisée en ce que le logement (37) de verrouillage est disposé sur le tube (30) à proximité de son extrémité libre.

6. Installation de nettoyage de glace selon au moins l'une quelconque des revendications précédentes, caractérisée en ce que le tube (30) se termine à distance de l'extrémité libre de l'arbre (11) d'essuie-glace.

7. Installation de nettoyage de glace selon au moins l'une quelconque des revendications précédentes, caractérisée en ce que le tube (30) est fabriqué en matière plastique en une seule pièce avec la tubulure (31) de raccordement de tuyau.

8. Installation de nettoyage de glace selon au moins l'une quelconque des revendications précédentes, caractérisée en ce que le corps (50) de buse est maintenu sur le tube (30) par une liaison de blocage en rotation.

9. Installation de nettoyage de glace selon la revendication 8, caractérisée en ce que l'extrémité libre du prolongement tubulaire (55) présente une fente axiale (66), et en ce que sur la paroi intérieure (36) du tube (30) fait saillie une nervure (39) orientée axialement qui est engagée dans cette fente axiale (66).

10. Installation de nettoyage de glace selon au moins l'une quelconque des revendications précédentes, caractérisée en ce que le tube (30) porte, à proximité de la tubulure (31) de raccordement de tuyau, un autre dispositif (80) de verrouillage servant à le fixer, sur un élément (71) de retenue fixe en position, par une liaison démontable.

11. Installation de nettoyage de glace selon la revendication 10, caractérisée en ce que l'arbre (11) d'essuie-glace émerge d'un boîtier de mécanisme qui est fermé par un couvercle (13) comportant une ouverture (70) pour le passage du tube (30), cette ouverture (70) étant fermée par une pièce de fermeture (71) servant d'élément de support pour le tube (30).

12. Installation de nettoyage de glace selon la revendication 11, caractérisée en ce que la pièce de fermeture (71) comporte un perçage (74) destiné à recevoir avec ajustement le tube (30) et en ce que, dans la région de ce perçage (74), il est prévu un logement (81) de verrouillage dans lequel s'engage une protubérance (34) de verrouillage qui fait saillie sur la surface de paroi du tube (30).

13. Installation de nettoyage de glace selon la revendication 12, caractérisée en ce que cette pièce de fermeture (71) présente sur la face frontale (75) qui est dirigée vers la tubulure (31) de raccordement de tuyau, un élément (76) servant à immobiliser le tube (30), muni de la tubulure (71) de raccordement de tuyau, dans un état bloqué en rotation.

14. Installation de nettoyage de glace selon la revendication 12, caractérisée en ce que la face frontale (75) de la pièce de fermeture (71) présente une encoche (76) dans laquelle s'engage un nez d'immobilisation (32) qui fait saillie sur le tube

(30).

Fig.1

Fig.3

Fig.2

Fig.5

Fig.4